(19) Europäisches Patentamt
European Patent Office
Office européen des brevets

(11) **EP 4 354 536 A1**

(12) **EUROPEAN PATENT APPLICATION**
published in accordance with Art. 153(4) EPC

(43) Date of publication:
**17.04.2024 Bulletin 2024/16**

(21) Application number: **22884060.9**

(22) Date of filing: **20.10.2022**

(51) International Patent Classification (IPC):
*H01M 4/131* (2010.01)    *H01M 4/134* (2010.01)
*H01M 4/48* (2010.01)    *H01M 4/38* (2006.01)
*H01M 4/62* (2006.01)    *H01M 4/1391* (2010.01)
*H01M 4/1395* (2010.01)    *H01M 10/052* (2010.01)
*H01M 4/02* (2006.01)

(52) Cooperative Patent Classification (CPC):
**H01M 4/02; H01M 4/131; H01M 4/134;
H01M 4/1391; H01M 4/1395; H01M 4/38;
H01M 4/48; H01M 4/62; H01M 10/052;** Y02E 60/10

(86) International application number:
**PCT/KR2022/016024**

(87) International publication number:
**WO 2023/068838 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.10.2021 KR 20210142042**

(71) Applicant: **LG Energy Solution, Ltd.
Seoul 07335 (KR)**

(72) Inventors:
• **PARK, Su Jin
Daejeon 34122 (KR)**
• **KWON, Yohan
Daejeon 34122 (KR)**
• **LEE, Jaewook
Daejeon 34122 (KR)**
• **KANG, Jisu
Pohang-si Gyeongsangbuk-do 37673 (KR)**
• **PARK, Soojin
Pohang-si Gyeongsangbuk-do 37673 (KR)**
• **SON, Hye Bin
Pohang-si Gyeongsangbuk-do 37673 (KR)**

(74) Representative: **Hoffmann Eitle
Patent- und Rechtsanwälte PartmbB
Arabellastraße 30
81925 München (DE)**

(54) **ANODE COMPOSITION, LITHIUM SECONDARY BATTERY ANODE COMPRISING SAME, LITHIUM SECONDARY BATTERY COMPRISING ANODE, AND METHOD FOR PREPARING ANODE COMPOSITION**

(57)    The present application relates to a negative electrode composition, a negative electrode for a lithium secondary battery, including the same, a lithium secondary battery including the negative electrode, and a method for preparing a negative electrode composition.

[Figure 1]

**Description**

[Technical Field]

This application claims priority to and the benefit of Korean Patent Application No. 10-2021-0142042 filed in the Korean Intellectual Property Office on October 22, 2021, the entire contents of which are incorporated herein by reference.

The present application relates to a negative electrode composition, a negative electrode for a lithium secondary battery, including the same, a lithium secondary battery including the negative electrode, and a method for preparing a negative electrode composition.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-containing particle having high discharge capacity may be used.

In particular, as the demand for high-density energy batteries has been recently increased, studies have been actively conducted on a method of increasing the capacity together using a silicon-containing compound such as Si/C or SiOx, which has a capacity 10-fold or higher than that of a graphite-based material as a negative electrode active material, but a silicon-containing compound, which is a high-capacity material, has a higher capacity than graphite used in the related art, but has a problem in that the volume rapidly expands in the charging process to disconnect the conductive path, resulting in deterioration in battery characteristics.

Thus, to solve problems when the silicon-containing compound is used as a negative electrode active material, measures to adjust the driving potential, additionally, measures to suppress the volume expansion itself such as methods of coating the active material layer with a thin film and methods of adjusting the particle diameter of the silicon-containing compound, various measures to prevent the conductive path from being disconnected, and the like have been discussed, but there is a limitation in the application of the measures because the performance of a battery may rather deteriorate due to the measures, so that there is still a limitation in the commercialization of preparation of a battery having a negative electrode with a high content of the silicon-containing compound.

Therefore, even when a silicon-containing compound is used as an active material to improve capacity performance, there is a need for research on a conductive material capable of preventing the conductive path from being damaged by the volume expansion of the silicon-containing compound and a binder capable of minimizing the volume expansion, and research on a method capable of maintaining the bonding strength with the conductive material and the binder which surround the active material has been conducted.

<Related Art Documents>

Japanese Patent Application Laid-Open No. 2009-080971

[Detailed Description of the Invention]

[Technical Problem]

Silicon-containing negative electrodes have excellent high energy density and capacity characteristics, but have poor service life characteristics due to the problem of volume expansion due to charging and discharging. Accordingly, it can be seen that the above problem can be solved when a negative electrode binder having a certain range of modulus is applied and simultaneously, a composite structure in which a negative electrode conductive material is bonded to the surface with the negative electrode binder is formed.

Therefore, the present application relates to a negative electrode composition, a negative electrode for a lithium secondary battery, including the same, a lithium secondary battery including the negative electrode, and a method for preparing a negative electrode composition.

[Technical Solution]

An exemplary embodiment of the present specification provides a negative electrode composition including: a silicon-containing active material; a first negative electrode conductive material; and a negative electrode binder, in which the negative electrode binder has a composite structure in which the first negative electrode conductive material is bonded to the surface of the negative electrode binder, the bond is a bond formed by a radical polymerization reaction, the negative electrode binder has a modulus of $1 \times 10^3$ MPa or more and $1 \times 10^4$ MPa or less at 25°C, and the silicon-containing active material is present in an amount of 60 parts by weight or more based on 100 parts by weight of the negative electrode composition.

In another exemplary embodiment provides a method for preparing a negative electrode composition, the method including: preparing a first negative electrode conductive material; forming a composite structure in which the first negative electrode conductive material is bonded to the surface of a binder by adding a thermal initiator and a binder monomer to the first negative electrode conductive material to initiate a radical polymerization; and mixing the composite and the silicon-containing active material.

In still another exemplary embodiment provides a negative electrode for a lithium secondary battery, including: a negative electrode current collector layer; and a negative electrode active material layer including the negative electrode composition according to the present application on one surface or both surfaces of the negative electrode current collector layer.

Finally, provided is a lithium secondary battery including: a positive electrode; the negative electrode for a lithium secondary battery according to the present application; a separator provided between the positive electrode and the negative electrode; and an electrolyte.

[Advantageous Effects]

In the case of the negative electrode composition according to an exemplary embodiment of the present invention, in using a silicon-containing active material which is a high-capacity material in order to manufacture a high-capacity battery, a material having a composite structure in which the first negative electrode conductive material is bonded to the surface with a negative electrode binder is used. The bond has a bond by a radical polymerization reaction, and the negative electrode composition improves the conductivity of an electrode by maintaining a bonding strength by a radical bond between a conductive material and a binder which surround the silicon-containing active material even in the change in volume of the active material due to charging and discharging using a negative binder having a modulus of $1 \times 10^3$ MPa or more and $1 \times 10^4$ MPa or less at 25°C as the negative electrode binder, and a battery to which the electrode is applied has a characteristic in which the service life evaluation capacity retention rate is increased.

Further, in the case of the negative electrode composition according to an exemplary embodiment of the present invention, a negative electrode composition having a structure in which a first negative electrode conductive material is bonded to the surface with a negative electrode binder and simultaneously having the binder having a modulus of $1 \times 10^3$ MPa or more and $1 \times 10^4$ MPa or less at 25°C is used, can maintain the bonding strength with the active material and the conductive material even in the change in volume of the active material as the negative electrode binder has a certain modulus, and accordingly, has a characteristic capable of preventing the distortion or deformation of the electrode.

In addition, the case of using an existing silicon-containing active material has a feature that volume expansion during charging and discharging can also be minimized as the negative electrode composition according to the present invention is used.

[Brief Description of Drawings]

FIG. 1 is a view illustrating the stacking structure of a negative electrode for a lithium secondary battery according to an exemplary embodiment of the present application.

FIG. 2 is a view illustrating the stacking structure of a lithium secondary battery according to an exemplary embodiment of the present application.

<Explanation of Reference Numerals and Symbols>

10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, "Dn" means the average particle diameter, and means the particle diameter at the n% point of the cumulative distribution of the number of particles according to the particle diameter. That is, D50 is the particle diameter at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode composition including: a silicon-containing active material; a first negative electrode conductive material; and a negative electrode binder, in which the negative electrode binder has a composite structure in which the first negative electrode conductive material is bonded to the surface, the bond is a bond by a radical polymerization reaction, the negative electrode binder has a modulus of 1 x 10$^3$ MPa or more and 1 x 10$^4$ MPa or less at 25°C, and the silicon-containing active material is present in an amount of 60 parts by weight or more based on 100 parts by weight of the negative electrode composition.

The negative electrode composition according to an exemplary embodiment of the present invention improves the conductivity of an electrode by maintaining the bonding strength caused by a radical bond between the first negative electrode conductive material and the negative electrode binder which surround a silicon-containing active material even in the change in volume of the active material due to charging and discharging as a negative electrode binder having a specific modulus range as described above and a first negative electrode conductive material composite which is bonded to the negative electrode binder are used, and a battery to which the electrode is applied has a characteristic in which the service life evaluation capacity retention rate is increased.

In an exemplary embodiment of the present application, provided is a negative electrode composition in which the silicon-containing active material includes one or more selected from the group consisting of SiOx (x=0), SiOx (0<x<2), SiC, and a Si alloy.

In an exemplary embodiment of the present application, provided is a negative electrode composition in which the silicon-containing active material includes one or more selected from the group consisting of SiOx (x=0), SiOx (0<x<2) and metal impurities, and includes the SiOx (x=0) in an amount of 70 parts by weight or more based on 100 parts by weight of the silicon-containing active material.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-containing active material.

In an exemplary embodiment of the present application, for the silicon-containing active material, particularly, pure silicon (Si) may be used as the silicon-containing active material. The use of pure silicon (Si) as the silicon-containing active material may mean that based on the total 100 parts by weight of the silicon-containing active material as described above, pure Si particles (SiOx (x=0)), which are not bound to other particles or elements, are included in the above range.

Since the silicon-containing active material has a remarkably high capacity compared to a graphite-based active material used in the related art, attempts to apply the silicon-containing active material are increasing, but the attempt is limited to a case where a small amount of the silicon-containing active material is mixed with the graphite-based active material and used, and the like because the silicon-containing active material has a high volume expansion rate in the charging and discharging process.

Therefore, in the case of the present invention, a negative electrode binder is used under specific modulus conditions, and simultaneously, the structure of the negative electrode binder is modified in order to achieve objects of maintaining the conductive path according to the volume expansion as described above and maintaining the bond of a negative electrode conductive material, a negative electrode binder, and a silicon-containing active material while using only the silicon-containing active material as the negative electrode active material in order to improve the capacity performance, and specifically, existing problems were solved using a negative electrode conductive material composite bonded to the negative electrode binder.

Meanwhile, the silicon-containing active material of the present invention may have an average particle diameter (D50) of 5 um to 10 um, specifically 5.5 um to 8 $\mu$m, and more specifically 6 um to 7 um. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-containing active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the heterogeneous phenomenon of the current density during charging and discharging.

In an exemplary embodiment of the present application, the silicon-containing active material generally has a characteristic BET surface area. The BET surface area of the silicon-containing active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET surface area is measured by DIN 66131 (using nitrogen).

In an exemplary embodiment of the present application, the silicon-containing active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode composition in which the silicon-containing active material is present in an amount of 60 parts by weight or more based on 100 parts by weight of the negative electrode composition.

In another exemplary embodiment, the silicon-containing active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 80 parts by weight or less, based on 100 parts by weight of the negative electrode composition.

The negative electrode composition according to the present application has a feature in which by using a specific conductive material and a specific binder, which can suppress the volume expansion rate in the charging and discharging process even though a silicon-containing active material having a remarkably high capacity is used in the above range, the performance of the negative electrode does not deteriorate and output characteristics at charging and discharging are excellent even though the above range is included.

In an exemplary embodiment of the present application, the silicon-containing active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 1, where A is the area and P is the boundary line.

$$[\text{Equation 1}]$$

$$4\pi A/P^2$$

In the related art, it was common to use only a graphite-based compound as a negative electrode active material, but recently, as the demand for a high-capacity battery has increased, attempts to mix and use a silicon-containing compound have been increased in order to increase the capacity. However, in the case of the silicon-containing compound, there is a limitation in that the volume rapidly expands in the process of charging/discharging to impair the conductive path formed in the negative electrode active material layer, consequently resulting in deterioration in the performance of the battery.

Therefore, in an exemplary embodiment of the present application, the first negative electrode conductive material has a composite structure bonded to the surface of the negative electrode binder, and as the bond, a bond by a radical polymerization reaction is used.

In an exemplary embodiment of the present application, provided is a negative electrode composition in which the first negative electrode conductive material includes one or more selected from the group consisting of a dotted conductive material and a linear conductive material.

In another exemplary embodiment, provided is a negative electrode composition in which the first negative electrode conductive material includes a dotted or linear conductive material.

In still another exemplary embodiment, provided is a negative electrode composition in which the first negative electrode conductive material includes a dotted conductive material.

In yet another exemplary embodiment, provided is a negative electrode composition in which the first negative electrode conductive material includes a linear conductive material.

In an exemplary embodiment of the present application, the first negative electrode conductive material has a configuration bonded to a negative electrode binder, and the negative electrode composition according to the present application may further include an additional second negative electrode conductive material to secure conductivity in addition to the first negative electrode conductive material.

In this case, the concept including both the first negative electrode conductive material and the second negative electrode conductive material is defined as a negative electrode conductive material. That is, the negative electrode conductive material is composed of a first negative electrode conductive material and a second negative electrode conductive material.

In an exemplary embodiment of the present application, the second negative electrode conductive material may include one or more selected from the group consisting of a dotted conductive material; a planar conductive material; and a linear conductive material.

In another exemplary embodiment, the second negative electrode conductive material may include: a dotted conductive material; a planar conductive material; or a linear conductive material.

In an exemplary embodiment of the present application, the first negative electrode conductive material means a conductive material which is bonded to the surface of the negative electrode binder, and the second negative electrode conductive material may mean a conductive material which is not bonded to the surface of the negative electrode binder.

Hereinafter, the dotted conductive material; the planar conductive material; and the linear conductive material will be described.

In an exemplary embodiment of the present application, the dotted conductive material may be used to enhance the conductivity of the negative electrode, and is preferably a conductive material having conductivity without inducing a chemical change. Specifically, the conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m²/g or more and 70 m²/g or less, preferably 45 m²/g or more and 65 m²/g or less, and more preferably

50 m$^2$/g or more and 60 m$^2$/g or less.

In an exemplary embodiment of the present application, the dotted conductive material may have a particle diameter of 10 nm to 100 nm, preferably 20 nm to 90 nm, and more preferably 40 nm to 60 nm.

In an exemplary embodiment of the present application, the planar conductive material may increase the surface contact between silicon particles in the negative electrode to improve conductivity and simultaneously suppress the disconnection of the conductive path due to the volume expansion.

The planar conductive material may increase the surface contact between silicon particles in the negative electrode to improve conductivity and simultaneously suppress the disconnection of the conductive path due to the volume expansion, and may be expressed as a plate-like conductive material or bulk-type conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 um to 7 um, specifically 3 um to 6 $\mu$m, and more specifically 4 um to 5 um. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 um or more and 1.5 um or less, a D50 of 4.0 um or more and 5.0 um or less, and a D90 of 7.0 um or more and 15.0 um or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 1m$^2$/g or more.

In another exemplary embodiment, the planar conductive material may have a BET specific surface area of 1m$^2$/g or more and 500 m$^2$/g or less, preferably 5m$^2$/g or more and 300m$^2$/g or less, and more preferably 5m$^2$/g or more and 300m$^2$/g or less.

In still another exemplary embodiment, the planar conductive material is a high specific surface area planar conductive material, and the BET specific surface area may satisfy a range of 50 m$^2$/g or more and 500 m$^2$/g or less, preferably 80 m$^2$/g or more and 300 m$^2$/g or less, and more preferably 100 m$^2$/g or more and 300 m$^2$/g or less.

In yet another exemplary embodiment, the planar conductive material is a low specific surface area planar conductive material, and the BET specific surface area may satisfy a range of 1 m$^2$/g or more and 40 m$^2$/g or less, preferably 5 m$^2$/g or more and 30 m$^2$/g or less, and more preferably 5 m$^2$/g or more and 25 m$^2$/g or less.

In addition, in the present application, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side or intertwined in an alignment where longitudinal axes of the carbon nanotube units are substantially the same. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, provided is a negative electrode composition in which the first negative electrode conductive material includes a linear conductive material, and the linear conductive material is single wall CNT (SWCNT).

In an exemplary embodiment of the present application, provided is a negative electrode composition, in which the negative electrode conductive material is included in an amount of 10 parts by weight or more and 40 parts by weight or less, based on 100 parts by weight of the negative electrode composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 25 parts by weight or less, based on 100 parts by weight of the negative electrode composition.

In an exemplary embodiment of the present application, the negative electrode conductive material may include one or more selected from the group consisting of a dotted conductive material and a linear conductive material as a first negative electrode conductive material, and may include a planar conductive material as a second negative electrode conductive material.

In an exemplary embodiment of the present application, the negative electrode conductive material includes a dotted conductive material or a linear conductive material as a first negative electrode conductive material, and may include a planar conductive material as a second negative electrode conductive material.

In an exemplary embodiment of the present application, the negative electrode conductive material includes a first negative electrode conductive material and a second negative electrode conductive material, and a ratio of the first negative electrode conductive material : the second negative electrode conductive material may satisfy 0.1 : 1 to 0.5 : 1.

In an exemplary embodiment of the present application, a ratio of the first negative electrode conductive material : the second negative electrode conductive material may satisfy 0.2 : 1.

In an exemplary embodiment of the present application, as the negative electrode conductive materials each satisfy the composition and ratio, the negative electrode conductive material has a feature in which output characteristics at a high C-rate are excellent because the service life characteristics of the existing lithium secondary battery are not greatly affected and points where the battery can be charged and discharged are increased.

The negative electrode conductive material according to the present application has a completely different configuration from a conductive material applied to the positive electrode. That is, the negative electrode conductive material according to the present application serves to capture a contact point between silicon-containing active materials in which the volume expansion of the electrode is very large due to charging and discharging, and the positive electrode conductive material serves to impart partial conductivity while playing a buffer role as a cushioning role when rolled, and the configuration and role thereof are completely different from those of the negative electrode conductive material of the present invention.

Further, the negative electrode conductive material according to the present application is applied to a silicon-containing active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-containing active material as in the present invention.

In an exemplary embodiment of the present application, the plate-like conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the plate-like conductive material used as the negative electrode conductive material is a material having a planar or plate-like shape, and may be expressed as plate-like graphite. That is, the plate-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

In an exemplary embodiment of the present application, the negative electrode binder may have a modulus of $1 \times 10^3$ MPa or more and $1 \times 10^4$ MPa or less at 25°C.

In another exemplary embodiment, the negative electrode binder may have a modulus of $1 \times 10^3$ MPa or more and $1 \times 10^4$ MPa or less, preferably $1.0 \times 10^3$ MPa or more and $5 \times 10^3$ MPa or less at 25°C.

By having a constant modulus as described above, it is possible to maintain the bonding strength with the silicon-containing active material and the negative electrode conductive material even when the volume of the silicon-containing active material is changed, thereby having a characteristic capable of preventing the distortion or deformation of the electrode.

In an exemplary embodiment of the present application, the negative electrode binder can be used without limitation when the modulus range is satisfied, but may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the negative electrode conductive material in order to prevent the distortion and structural deformation of the negative electrode structure in the volume expansion and relaxation of the silicon-containing active material, and when the above role is satisfied, all general binders can be applied, specifically, a water-based binder can be used, and more specifically, the binder may include one or more selected from the group consisting of polyacryl acid (PAA); and polyacryl amide (PAM).

In an exemplary embodiment of the present application, the negative electrode binder may be included in an amount of 30 parts by weight or less, preferably 25 parts by weight or less, and more preferably 20 parts by weight or less, and may be included in an amount of 5 parts by weight or more and 10 parts by weight or more, based on 100 parts by weight of the negative electrode composition.

In this case, the negative electrode binder has a composite structure in which the first negative electrode conductive material is bonded to the surface, and may include all the weight parts of the first negative electrode conductive material to satisfy the above weight part range.

When a Si-based material is used in the negative electrode compared to the existing carbon-based negative electrode, a water-based binder is applied by the aforementioned parts by weight, so that a dotted conductive material having a low functional group content can be used, and depending on the feature, the dotted conductive material has hydrophobicity to have a feature in which the bonding strength with the conductive material/binder becomes excellent.

In an exemplary embodiment of the present application, the negative electrode binder included in the negative electrode composition has a composite structure in which the first negative electrode conductive material is bonded to the surface, and has a characteristic that the bonding strength is excellent even in the volume expansion of the Si material as the composite structure is formed.

In an exemplary embodiment of the present application, the composite may include a polyacryl amide to which a dotted conductive material is bonded.

In an exemplary embodiment of the present application, the composite may include a polyacryl acid to which a dotted conductive material is bonded.

In an exemplary embodiment of the present application, the composite may include a polyacryl amide to which a linear conductive material is bonded.

In an exemplary embodiment of the present application, the composite may include a polyacryl acid to which a linear conductive material is bonded.

In an exemplary embodiment of the present application, the composite may include a polyacryl amide to which linear and dotted conductive materials are bonded.

In an exemplary embodiment of the present application, the composite may include a polyacryl acid to which linear and dotted conductive materials are bonded.

In an exemplary embodiment of the present application, provided is a method for preparing a negative electrode composition, the method including: preparing a first negative electrode conductive material; forming a composite structure in which the first negative electrode conductive material is bonded to the surface of a binder by adding a thermal initiator and a binder monomer to the first negative electrode conductive material to initiate a radical polymerization; and mixing the composite and the silicon-containing active material.

In the method for preparing the negative electrode composition, each composition contained in the negative electrode composition may be the same as described above.

In an exemplary embodiment of the present application, provided is a method for preparing a negative electrode composition, the method including an activation step of introducing a functional group into the surface of the conductive material by adding an oxidant to the first negative electrode conductive material after the preparing of the first negative electrode conductive material.

Depending on the type of first negative electrode conductive material, the above steps may be included or omitted depending on whether a functional group needs to be introduced through surface oxidant treatment.

That is, an activation step of introducing a functional group into the surface of the first negative electrode conductive material by adding an oxidant to the first negative electrode conductive material may be omitted, and specifically, when a dotted conductive material is used, the activation step may be omitted.

The negative electrode binder of the present application has a composite structure in which the first negative electrode conductive material is bonded to the surface, and may have the structure of a binder in which the first negative electrode conductive material is finally bonded to the surface by adding an oxidant to the first negative electrode conductive material to introduce a functional group into the surface, thereby achieving activation as described above, or by preparing the first negative electrode conductive material itself, and then adding a binder monomer, and initiating a radical polymerization.

In an exemplary embodiment of the present application, as the oxidant, it is possible to use any material widely used in the art, which can serve as an oxidant, and specifically, the oxidant may include hydrogen peroxide.

In an exemplary embodiment of the present application, as the oxidant, an oxidant in which the ratio of distilled water : hydrogen peroxide is 5 : 1 to 9 : 1 may be used.

In an exemplary embodiment of the present application, the activation step of introducing a functional group into the surface of the conductive material by adding an oxidant to the first negative electrode conductive material may be an activation step through stirring for 2 hours or more and 5 hours or less after the oxidant is added.

In an exemplary embodiment of the present application, the forming of the composite structure in which the first negative electrode conductive material is bonded to the surface of the negative electrode binder by adding a thermal initiator and a binder monomer to the first negative electrode conductive material to initiate a radical polymerization may be initiating a radical polymerization by including the first negative electrode conductive material into which the functional group is introduced in a solvent.

In an exemplary embodiment of the present application, provided is a method for preparing a negative electrode composition, in which the forming of the composite structure in which the first negative electrode conductive material is bonded to the surface of the binder by adding a thermal initiator and a binder monomer to the first negative electrode conductive material to initiate a radical polymerization includes a grafting radical polymerization process or a radical polymerization process, and the bond is a bond by the radical polymerization reaction.

As the solvent, a general organic solvent may be used.

As the thermal initiator, a thermal initiator, which may be generally used, is used, and specifically, ammonium persulfate may be used.

The initiating of the radical polymerization may include initiating the reaction in an atmosphere of 40°C to 100°C for 30 minutes to 3 hours.

In an exemplary embodiment of the present application, provided is a method for preparing a negative electrode composition, in which the functional group is one or more selected from the group consisting of a carboxyl group (-COOH); and a hydroxyl group (-OH).

In an exemplary embodiment of the present application, a negative electrode slurry may be formed by putting a solvent for forming a negative electrode slurry into the negative electrode composition, and a negative electrode may be formed by applying the negative electrode slurry to a negative electrode current collector layer.

In this case, the solid content of the negative electrode slurry may satisfy 10% to 40%.

In an exemplary embodiment of the present application, the solvent for forming a negative electrode slurry can be used without limitation as long as the solvent can dissolve the negative electrode composition, but specifically, distilled water may be used.

In an exemplary embodiment of the present application, provided is a negative electrode for a lithium secondary battery, including: a negative electrode current collector layer; and a negative electrode active material layer including the negative electrode composition according to the present application formed on one surface or both surfaces of the negative electrode current collector layer.

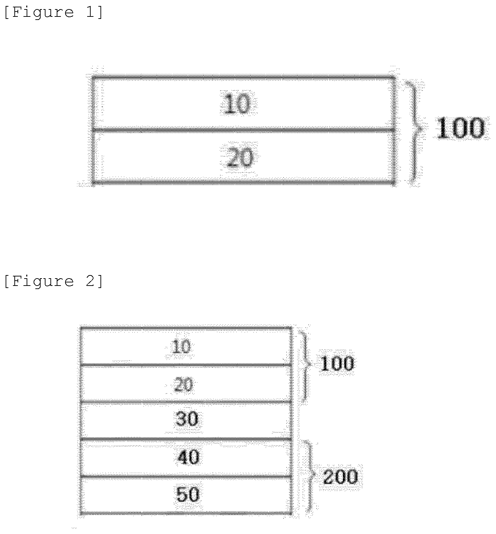

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

In an exemplary embodiment of the present application, the negative electrode current collector layer generally has a thickness of 1 um to 100 um. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 um or more and 100 um or less, and the negative electrode active material layer has a thickness of 20 um or more and 500 um or less.

However, the thickness may be variously modified depending on the type and use of the negative electrode used, and is not limited thereto.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_3$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.6$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.6$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

In an exemplary embodiment of the present application, the positive electrode active material includes a lithium composite transition metal compound including nickel (Ni), cobalt (Co) and manganese (Mn), the lithium composite transition metal compound includes single particles or secondary particles, and the single particles may have an average particle diameter (D50) of 1 um or more.

For example, the single particles may have an average particle diameter (D50) of 1 um or more and 12 um or less, 1 um or more and 8 um or less, 1 um or more and 6 um or less, more than 1 um and 12 um or less, more than 1 um and 8 um or less, or more than 1 um and 6 um or less.

Even though the single particles are formed as small particle diameters having an average particle diameter (D50) of 1 um or more and 12 um or less, the particle strength may be excellent. For example, the single particles may have a particle strength of 100 to 300 MPa when rolled with a force of 650 kgf/cm². As a result, even though the single particles are rolled with a strong force of 650 kgf/cm², a phenomenon in which the number of particulates in the electrode due to cracking of the particles is increased is alleviated, thereby improving the service life characteristics of the battery.

The single particles may be prepared by mixing a transition metal precursor and a lithium raw material and firing the resulting mixture. The secondary particles may be prepared by a different method than the single particles, and the composition thereof may be the same as or different from that of the single particles.

The method of forming the single particles is not particularly limited, but in general, single particles may be formed by increasing the firing temperature to achieve overfiring, and single particles may be prepared by a method of using an additive such as a grain growth promoter that helps overfiring or changing a starting material, and the like.

For example, the firing is performed at a temperature capable of forming single particles. In order to form the single particles, the firing needs to be performed at a temperature higher than that in the preparation of the secondary particles, and for example, when the composition of the precursor is the same, the firing needs to be performed at a temperature about 30°C to 100°C higher than that when the secondary particles are prepared. The firing temperature for forming the single particles may vary depending on the metal composition in the precursor, and for example, when a high-Ni NCM-based lithium composite transition metal oxide having a nickel (Ni) content of 80 mol% or more is desired to be formed as a single particle, the firing temperature may be 700°C to 1000°C, preferably approximately 800°C to 950°C. When the firing temperature satisfies the above range, a positive electrode active material including single particles with excellent electrochemical properties may be prepared. When the firing temperature is less than 790°C, a positive electrode active material including a lithium composite transition metal compound in the form of secondary particles may be prepared, and when the firing temperature exceeds 950°C, the firing may occur excessively, so that a layered crystal structure may not be properly formed, thereby degrading the electrochemical properties.

In the present specification, the single particle is a term used to distinguish single particles from secondary particles formed by aggregation of tens to hundreds of primary particles in the related art, and is a concept including the form of a single particle composed of one primary particle and a pseudo-single particle which is an aggregate of 30 or less primary particles.

Specifically, in the present invention, the single particle may be in the form of a single particle composed of one primary particle or a pseudo-single particle which is an aggregate of 30 or less primary particles, and secondary particles may be in the form of aggregation of several hundred primary particles.

In an exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be in the form of a single particle composed of one primary particle or a pseudo-single particle which is an aggregate of 30 or less primary particles, and secondary particles may be in the form of aggregation of several hundred primary particles.

The above-described lithium composite transition metal compound may further include secondary particles. A secondary particle refers to a form formed by aggregation of primary particles, and may be distinguished from the concept of a single particle including the form of one primary particle, one single particle or a pseudo-single particle which is an aggregate of 30 or less primary particles.

The secondary particles may have a particle diameter (D50) of 1 um to 20 um, 2 um to 17 um, preferably 3 um to 15 um. The secondary particles may have a specific surface area (BET) of 0.05 m$^2$/g to 10 m$^2$/g, preferably 0.1 m$^2$/g to 1 m$^2$/g, and more preferably 0.3 m$^2$/g to 0.8 m$^2$/g.

In additional exemplary embodiments of the present application, the secondary particle is an aggregate of primary particles, and the primary particles have an average particle diameter (D50) of 0.5 um to 3 um. Specifically, the secondary particle may be in the form of aggregation of several hundred primary particles, and the primary particles may have an average particle diameter (D50) of 0.6 um to 2.8 um, 0.8 um to 2.5 um, or 0.8 um to 1.5 um.

When the average particle diameter (D50) of the primary particles satisfies the above range, a single particle positive electrode active material with excellent electrochemical properties may be formed. When the average particle diameter (D50) of the primary particles is too small, the number of aggregated primary particles forming the lithium-nickel-based oxide particles increases, so the effect of suppressing the occurrence of particle cracking during rolling is reduced, and when the average particle diameter (D50) of the primary particles is too large, the lithium diffusion path inside the primary particles becomes long, so the resistance increases and the output characteristics may deteriorate.

According to additional exemplary embodiments of the present application, the average particle diameter (D50) of the single particles is characterized by being smaller than the average particle diameter (D50) of the secondary particles. Therefore, even though the single particles are formed of small particle diameters, the single particles may have excellent particle strength, and the excellent particle strength may alleviate a phenomenon in which the number of particulates in the electrode due to cracking of the particles is increased, thereby improving the service life characteristics of the battery.

In an exemplary embodiment of the present application, the average particle diameter (D50) of the single particles is 1 um to 18 um smaller than the average particle diameter (D50) of the secondary particles.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even though formed with a small particle diameter, and thus, the excellent particle strength alleviates a phenomenon in which the number of particulates in the electrode due to cracking of the particles is increased, so that there is an effect of improving the service life characteristics of the battery and improving the energy density.

According to additional exemplary embodiments of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles within the above range are included, excellent battery characteristics may be exhibited in combination with the above-described negative electrode material. In particular, when the amount of the single particles is 15 parts by weight or more, a phenomenon in which the number of particulates in the electrode due to particle cracking during the rolling process after manufacturing the electrode is increased may be alleviated, thereby improving the service life characteristics of the battery.

In an exemplary embodiment of the present application, the lithium composite transition metal compound may further include secondary particles, and the amount of the secondary particles may be 85 parts by weight or less based on 100 parts by weight of the positive electrode active material. The amount of the secondary particles may be 80 parts by weight or less, 75 parts by weight or less, or 70 parts by weight or less based on 100 parts by weight of the positive electrode active material. The amount of the secondary particles may be 0 parts by weight or more based on 100 parts by weight of the positive electrode active material.

When the above range is satisfied, the above-described effect due to the presence of the positive electrode active material of single particles may be maximized. When the positive electrode active material of the secondary particles is included, the components may be the same as those exemplified as the above-described single particle positive electrode active material, may be different components, and may mean a form of aggregation of single particle forms.

In an exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Examples>**

**<Example 1>- Manufacture of negative electrode**

After SWCNT was activated (-OH, -COOH) by ultrasonic treatment in DI water : $H_2O_2$ (9 : 1) for 30 minutes, treatment for radical polymerization was performed at 60°C for 24 hours by adding acrylamide to the SWCNT in DMF : DI water (1 : 9) and using ammonium persulfate as an initiator. As a result, SWCNT-PAM was prepared as a binder to which the first negative electrode conductive material was bonded.

Si as a silicon-containing active material, a plate-like graphite conductive material (specific surface area: 17 $m^2$/g, average particle diameter (D50): 3.5 pm), and a binder (SWCNT-PAM) to which the first negative electrode conductive material prepared above was bonded were added at a weight ratio of 80 : 10 : 10 to distilled water as a solvent to prepare a negative electrode slurry.

A Cu foil having a thickness of 15 um was coated with a negative electrode active material layer to a thickness of 30 μm, and then dried at 130°C for 12 hours, and rolled at a negative electrode porosity of 40% to manufacture a negative electrode.

**<Example 2>- Manufacture of negative electrode**

Treatment for radical polymerization was performed at 60°C for 24 hours by adding acrylamide to carbon black (Super-P) in DMF : DI water (1 : 9) and using ammonium persulfate as an initiator. As a result, Super-P-PAM was prepared as a binder to which the first negative electrode conductive material was bonded.

Si as a silicon-containing active material, a plate-like graphite conductive material (specific surface area: 17 $m^2$/g, average particle diameter (D50): 3.5 pm), and a binder (Super-P-PAM) to which the first negative electrode conductive material prepared above was bonded were added at a weight ratio of 80 : 10 : 10 to distilled water as a solvent to prepare a negative electrode slurry.

A Cu foil having a thickness of 15 um was coated with a negative electrode active material layer to a thickness of 30 $\mu$m, and then dried at 130°C for 12 hours, and rolled at a negative electrode porosity of 40% to manufacture a negative electrode.

**<Example 3>- Manufacture of negative electrode**

A negative electrode was manufactured in the same manner as in Example 2, except that Super-P-PAA was prepared as a binder to which the first negative electrode conductive material was bonded by adding acryl acid instead of acrylamide in Example 2.

**<Example 4>- Manufacture of negative electrode**

A negative electrode was manufactured in the same manner as in Example 1, except that a solution in which SWCNT was activated (-OH, -COOO) by performing ultrasonic treatment in DI water : $H_2O_2$ (9:1) for 30 minutes and Super-P powder as carbon black were added, acrylamide was added in DMF : DI water (1 : 9), ammonium persulfate was used as an initiator, and treatment for radical polymerization was performed at 60°C for 24 hours to prepare Super-P/SWCNT-PAA as a binder to which the first negative electrode conductive material was bonded.

**<Comparative Example 1>- Manufacture of negative electrode**

Si as a silicon-containing active material, a platelike graphite conductive material (specific surface area: 17 $m^2$/g, average particle diameter (D50): 3.5 $\mu$m), SWCNT, and PAM as a binder were added at a weight ratio of 80 : 9.5 : 0.5 : 10 to distilled water as a solvent to prepare a negative electrode slurry.

A Cu foil having a thickness of 15 um was coated with a negative electrode active material layer to a thickness of 30 $\mu$m, and then dried at 130°C for 12 hours, and rolled at a negative electrode porosity of 40% to manufacture a negative electrode.

**<Comparative Example 2>- Manufacture of negative electrode**

SWCNT was activated (-OH, -COOH) by performing ultrasonic treatment in DI water : $H_2O_2$ (9 : 1) for 30 minutes, and then mixed with a styrene butadiene rubber (SBR) binder to form a state in which SWCNT was well dispersed in SBR. In this case, SWCNT was formed so as to reach 3 wt% based on the weight of SBR. As a result, SWCNT-SBR was prepared as a binder in which a conductive material was dispersed.

Si as a silicon-containing active material, a platelike graphite conductive material (specific surface area: 17 $m^2$/g, average particle diameter (D50): 3.5 pm), and a binder (SWCNT-SBR) in which the conductive material prepared above was dispersed were added at a weight ratio of 80 : 10 : 10 to distilled water as a solvent to prepare a negative electrode slurry.

A Cu foil having a thickness of 15 um was coated with a negative electrode active material layer to a thickness of 30 $\mu$m, and then dried at 130°C for 12 hours, and rolled at a negative electrode porosity of 40% to manufacture a negative electrode.

**<Comparative Example 3>- Manufacture of negative electrode**

Si as a silicon-containing active material, a platelike graphite conductive material (specific surface area: 17 $m^2$/g, average particle diameter (D50): 3.5 pm), SWCNT, and SBR as a binder were added at a weight ratio of 80 : 9.5 : 0.5 : 10 to distilled water as a solvent to prepare a negative electrode slurry.

A Cu foil having a thickness of 15 um was coated with a negative electrode active material layer to a thickness of 30 $\mu$m, and then dried at 130°C for 12 hours, and rolled at a negative electrode porosity of 40% to manufacture a negative electrode.

**<Comparative Example 4>- Manufacture of negative electrode**

In Example 1, after SWCNT was activated (-OH, -COOH) by ultrasonic treatment in DI water : $H_2O_2$ (9 : 1) for 30 minutes, treatment for radical polymerization was performed at 60°C for 24 hours by adding acrylamide to the SWCNT in DMF : DI water (1 : 9) and using ammonium persulfate as an initiator. As a result, a negative electrode was manufactured in the same manner as in Example 1, except that SWCNT-PAM-1 was prepared as a binder to which a first negative electrode conductive material was bonded.

**<Comparative Example 5>- Manufacture of negative electrode**

Si as a silicon-containing active material, a platelike graphite conductive material (specific surface area: 17 $m^2/g$, average particle diameter (D50): 3.5 $\mu$m), SWCNT, and PAM-1 as a binder were added at a weight ratio of 80 : 9.5 : 0.5 : 10 to distilled water as a solvent to prepare a negative electrode slurry.

A Cu foil having a thickness of 15 um was coated with a negative electrode active material layer to a thickness of 30 $\mu$m, and then dried at 130°C for 12 hours, and rolled at a negative electrode porosity of 40% to manufacture a negative electrode.

The modulus values of the binders used in the Examples and Comparative Examples are shown in the following Table 1.

[Table 1]

|  | PAM | PAA | SBR | PAM-1 |
|---|---|---|---|---|
| Modulus (Pa) | 1170MPa | 4180MPa | 359MPa | 13000MPa |

The negative electrodes manufactured in Examples 1 to 4 and Comparative Examples 1 to 5 were subjected to CHC capacity retention rate evaluation (@SOH 80%) and electrode swelling evaluation as shown in the following Table 2, and the results are shown in the following Table 2.

[Table 2]

|  | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| CHC capacity retention evaluation | 25 cycle | 22 cycle | 21 cycle | 25 cycle | 15 cycle | 15 cycle | 11 cycle | 18 cycle | 16 cycle |
| Rate of increase in thickness after initial charging/discharing | 78.8% | 84.7% | 86.4% | 78.0% | 100.0% | 94.5% | 123% | 89.9% | 91.2% |

As can be confirmed in Table 2, it could be confirmed that as a negative electrode having the structure of a composite in which a first negative electrode conductive material was bonded to the surface with a negative electrode binder was used in using a silicon-containing active material which is a high capacity material, the conductivity of an electrode was improved by maintaining a bonding strength by a radical bond between the conductive material and the binder, and a battery to which the electrode was applied has a characteristic in which the service life evaluation capacity retention rate is increased.

In particular, when a linear conductive material (SWCNT) was used as a conductive material to be bonded, it could be confirmed that the capacity retention rate was excellent and the electrode swelling evaluation was also particularly excellent.

Further, when Example 1 and Comparative Example 2 are compared, only the types of binders used are different, and when compared to Example 1, Comparative Example 2 has a lower capacity retention rate and significantly increased rate of increase in thickness after initial charging and discharging particularly after the initial charging and discharging to exhibit poor characteristics in the swelling evaluation. That is, it could be confirmed from Table 2 that in the case of the negative electrode according to the present application, a negative electrode having a structure in which a negative electrode conductive material is bonded to the surface with a binder and simultaneously having the binder having a modulus of $1 \times 10^3$ MPa or more and $1 \times 10^4$ MPa or less at 25°C is used, can maintain the bonding strength with the active material and the conductive material even in the change in volume of the active material as the negative electrode binder has a certain modulus, and accordingly, has a characteristic capable of preventing the distortion or deformation of the electrode.

Comparative Example 1 is a case where the modulus range of the negative electrode binder according to the present application is satisfied but a bond with the first negative electrode conductive material is not formed, and Comparative Example 2 forms a bond with the first negative electrode conductive material as described above, but does not satisfy the modulus (less than the lower limit) of the negative electrode binder.

In addition, Comparative Example 3 is a case where the same binder as Comparative Example 2 is used, but a bond with the first negative electrode conductive material is not also formed, and Comparative Example 4 is a case where a bond with the first negative electrode conductive material is formed, but the modulus of the negative electrode binder (exceeding the upper limit) is not satisfied, and Comparative Example 5 is a case where the same binder as Comparative Example 4 is used, and a bond with the first negative electrode conductive material is not also formed.

When the above Examples and Comparative Examples are compared, it could be confirmed that the Examples using the negative electrode composition according to the present application had an excellent capacity retention rate and a lower rate of increase in thickness after charging and discharging than the Comparative Examples. This is because a negative electrode binder that satisfies a specific modulus was used and a composite forming a bond with a conductive material was additionally used.

When confirming Comparative Examples 1, 3 and 5, which do not form a bond with a conductive material, it can be seen that the rate of increase in thickness after charging and discharging is significantly increased compared to the Examples and other Comparative Examples. This indicates that even though the modulus range of the negative electrode binder is satisfied, the volume expansion is increased when a bond is not formed, and explains the reason why the negative electrode composition according to the present application uses a negative electrode binder that satisfies a specific modulus and has to additionally require a combination of a composite forming a bond with a conductive material. Furthermore, Comparative Examples 2 and 4 are cases where the modulus of the negative electrode binder is not satisfied, with Comparative Example 2 corresponding to less than the lower limit of the modulus and Comparative Example 4 corresponding to more than the upper limit of the modulus.

It can be confirmed that Comparative Examples 2 and 4 form a bond compared to other Comparative Examples and have a small volume expansion, but it can be confirmed that the capacity retention rate and volume expansion in Comparative Examples 2 and 4 are very severe compared to the Examples.

**Claims**

1. A negative electrode composition comprising:

   a silicon-containing active material;
   a first negative electrode conductive material; and
   a negative electrode binder,
   wherein the negative electrode binder has a composite structure in which the first negative electrode conductive material is bonded to the surface of the negative electrode binder,
   wherein the bond is a bond formed by a radical polymerization reaction,
   wherein the negative electrode binder has a modulus of $1 \times 10^3$ MPa or more and $1 \times 10^4$ MPa or less at 25°C, and
   wherein the silicon-containing active material is present in an amount of 60 parts by weight or more based on 100 parts by weight of the negative electrode composition.

2. The negative electrode composition of claim 1, wherein the first negative electrode conductive material comprises at least one selected from the group consisting of a dotted conductive material and a linear conductive material.

3. The negative electrode composition of claim 1, wherein the first negative electrode comprises a linear conductive material, and
wherein the linear conductive material is a single wall CNT (SWCNT).

4. The negative electrode composition of claim 1, wherein the silicon-containing active material comprises one or more selected from the group consisting of SiOx (x=0), SiOx (0<x<2), SiC, and a Si alloy.

5. The negative electrode composition of claim 1, wherein the silicon-containing active material comprises one or more selected from the group consisting of SiOx (x=0), SiOx (0<x<2) and metal impurities, and comprises the SiOx (x=0) in an amount of 70 parts by weight or more based on 100 parts by weight of the silicon-containing active material.

6. The negative electrode composition of claim 1, wherein the negative electrode binder comprises at least oneselected from the group consisting of polyacryl acid (PAA); and polyacryl amide (PAM).

7. A method for preparing a negative electrode composition, the method comprising:

preparing a first negative electrode conductive material;
forming a composite structure wherein the first negative electrode conductive material is bonded to the surface of a binder by adding a thermal initiator and a binder monomer to the first negative electrode conductive material to initiate a radical polymerization; and
mixing the composite and the silicon-containing active material.

8. The method of claim 7, the method further comprising:
an activation step of introducing a functional group onto a surface of the first negative electrode conductive material by adding an oxidant to the first negative electrode conductive material after the preparing of the first negative electrode conductive material.

9. The method of claim 7, wherein the forming of the composite structure wherein the first negative electrode conductive material is bonded to the surface of the binder by adding a thermal initiator and a binder monomer to the first negative electrode conductive material to initiate a radical polymerization comprises a grafting radical polymerization process or a radical polymerization process, and the bond is a bond formed by the radical polymerization reaction.

10. The method of claim 8, wherein the functional group is at least one selected from the group consisting of a carboxyl group (-COOH); and a hydroxyl group (-OH).

11. A negative electrode for a lithium secondary battery, comprising:

a negative electrode current collector layer; and
a negative electrode active material layer comprising the negative electrode composition according to any one of claims 1 to 6 formed on one surface or both surfaces of the negative electrode current collector layer.

12. The negative electrode of claim 11, wherein the negative electrode current collector layer has a thickness of 1 um or more and 100 um or less, and
wherein the negative electrode active material layer has a thickness of 20 um or more and 500 um or less.

13. A lithium secondary battery comprising:

a positive electrode;
the negative electrode for a lithium secondary battery according to claim 11;
a separator provided between the positive electrode and the negative electrode; and
an electrolyte.

[Figure 1]

[Figure 2]

## INTERNATIONAL SEARCH REPORT

| International application No. |
|---|
| **PCT/KR2022/016024** |

**A.    CLASSIFICATION OF SUBJECT MATTER**

**H01M 4/131**(2010.01)i; **H01M 4/134**(2010.01)i; **H01M 4/48**(2010.01)i; **H01M 4/38**(2006.01)i; **H01M 4/62**(2006.01)i; **H01M 4/1391**(2010.01)i; **H01M 4/1395**(2010.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/131(2010.01); H01M 10/052(2010.01); H01M 10/0525(2010.01); H01M 10/0587(2010.01); H01M 4/13(2010.01); H01M 4/134(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 모듈러스 (modulus), 라디칼 중합반응 (radical polymerization), 바인더 (binder), 도전제 (conductive agent), 실리콘 (silicon), 단일벽 탄소나노튜브 (SWCNT), 폴리아크릴아마이드 (poly acryl amide)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2015-0107928 A (KOREA INSTITUTE OF CERAMIC ENGINEERING AND TECHNOLOGY) 24 September 2015 (2015-09-24)<br>    See abstract; paragraphs [0032]-[0033], [0035]-[0037] and [0039]; and claims 1-6. | 1-13 |
| A | WOO, H. et al. 3D Meshlike polyacrylamide hydrogel as a novel binder system via in situ polymerization for high-performance Si-based electrode. Advanced Materials Interfaces. 2020, vol. 7, thesis no. 1901475, pp. 1-9.<br>    See entire document. | 1-13 |
| A | KR 10-2007-0090502 A (SAMSUNG SDI CO., LTD.) 06 September 2007 (2007-09-06)<br>    See entire document. | 1-13 |
| A | KR 10-2020-0047273 A (LG CHEM, LTD.) 07 May 2020 (2020-05-07)<br>    See entire document. | 1-13 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 February 2023** | **16 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/016024** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 102623672 A (NINGDE AMPEREX TECHNOLOGY LTD. et al.) 01 August 2012 (2012-08-01)<br>See entire document. | 1-13 |
| A | KR 10-2013-0082433 A (SAMSUNG SDI CO., LTD.) 19 July 2013 (2013-07-19)<br>See entire document. | 1-13 |

Form PCT/ISA/210 (second sheet) (July 2022)

| INTERNATIONAL SEARCH REPORT<br>Information on patent family members | | | International application No.<br>**PCT/KR2022/016024** |
|---|---|---|---|

| Patent document<br>cited in search report | | Publication date<br>(day/month/year) | Patent family member(s) | | | Publication date<br>(day/month/year) |
|---|---|---|---|---|---|---|
| KR 10-2015-0107928 | A | 24 September 2015 | None | | | |
| KR 10-2007-0090502 | A | 06 September 2007 | None | | | |
| KR 10-2020-0047273 | A | 07 May 2020 | None | | | |
| CN 102623672 | A | 01 August 2012 | None | | | |
| KR 10-2013-0082433 | A | 19 July 2013 | CN | 103199257 | A | 10 July 2013 |
| | | | CN | 103199257 | B | 31 May 2017 |
| | | | EP | 2615674 | A1 | 17 July 2013 |
| | | | EP | 2615674 | B1 | 10 May 2017 |
| | | | JP | 2013-143382 | A | 22 July 2013 |
| | | | JP | 6265598 | B2 | 24 January 2018 |
| | | | KR | 10-1708359 | B1 | 27 February 2017 |
| | | | US | 2013-0177807 | A1 | 11 July 2013 |
| | | | US | 9373843 | B2 | 21 June 2016 |

Form PCT/ISA/210 (patent family annex) (July 2022)

**REFERENCES CITED IN THE DESCRIPTION**

**Patent documents cited in the description**

- KR 1020210142042
- JP 2009080971 A